# EUROPÄISCHE PATENTSCHRIFT

(11) **EP 2 987 671 B1**
(45) Veröffentlichungstag und Bekanntmachung des Hinweises auf die Patenterteilung: **11.10.2017**
(21) Anmeldenummer: 15001658.2
(22) Anmeldetag: 03.06.2015
(51) Int. Cl.: B60K 13/04

(54) **KRAFTFAHRZEUG MIT HECKSEITIGEM REDUKTIONSMITTELTANK**
MOTOR VEHICLE WITH REAR REDUCING AGENT TANK
VÉHICULE AUTOMOBILE DOTÉ D'UN RÉSERVOIR D'AGENT RÉDUCTEUR MONTÉ À L'ARRIÈRE

(30) Priorität: 20.08.2014 DE 102014012372
(43) Veröffentlichungstag der Anmeldung: 24.02.2016
(73) Patentinhaber: MAN Truck & Bus AG, 80995 München (DE)
(72) Erfinder: Mischke, Marco, 85368 Moosburg (DE); Teubner, Daniel, 85304 Ilmmünster (DE)
(74) Vertreter: v. Bezold & Partner Patentanwälte - PartG mbB

(56) Entgegenhaltungen:
- EP-A1- 2 048 016
- EP-A2- 2 712 788
- WO-A1-2014/097492
- DE-A1-102006 059 991
- DE-A1-102007 019 912
- DE-A1-102008 020 213
- DE-A1-102013 001 473
- JP-A- 2010 052 459

## Beschreibung

Die Erfindung betrifft ein Kraftfahrzeug, vorzugsweise ein Nutzfahrzeug, insbesondere einen Lastkraftwagen oder eine Sattelzugmaschine, mit einer Abgasnachbehandlungsanlage und einem Reduktionsmitteltank zur Aufnahme eines Reduktionsmittels, z. B. eines Harnstoff enthaltenden Gemischs.

Zum Stand der Technik können zunächst die gattungsbildende EP 2 048 016 A1, die JP 2010 052459 A, die DE 10 2006 059991 A1, die WO 2014/097492 A1, die DE 10 2007 019912 A1, die DE 10 2008 020213 A1, die EP 2 712 788 A2 und die DE 10 2013 001473 A1 genannt werden.

Im Stand der Technik sind Nutzfahrzeuge bekannt mit Abgasnachbehandlungsanlagen, die auf einer sogenannten selektiven katalytischen Reduktion (SCR) von Stickoxiden basieren. Derartige Abgasnachbehandlungsanlagen umfassen üblicherweise einen Dieselmotor, eine Harnstoff-Wasser-Einspritzdüse, die mit einem Harnstoff-Wasser-Tank verbunden ist und zum Einspritzen des Harnstoff-Wassers in eine Abgasleitung dient, und eine stromabwärts angeordnete Katalysatoranordnung, die neben einem SCR-Katalysator (SCR: selektive katalytische Reduktion) einen Hydrolysekatalysator und einen Oxidationskatalysator umfassen kann. Der Harnstoff-Wasser-Tank ist üblicherweise zwischen den Längsträgern und vor dem Schlussquerträger der Rahmentragstruktur der Nutzfahrzeuge angeordnet. Das ist mit zweierlei Nachteilen verbunden. Einerseits nimmt der Harnstoff-Wasser-Tank Bauraum in Anspruch, der für andere Nutzfahrzeugkomponenten genutzt werden könnte oder sogar erforderlich ist. Andererseits ist zwischen den Längsträgern und vor dem Schlussquerträger an sich wenig Bauraum vorhanden, sodass das Aufnahmevolumen des Harnstoff-WasserTanks begrenzt ist.

Eine Aufgabe der Erfindung ist es, eine Möglichkeit zu schaffen, mittels der das Aufnahmevolumen eines Reduktionsmitteltanks für eine Abgasnachbehandlungsanlage eines Kraftfahrzeugs vergrößert werden kann.

Diese Aufgabe wird mit den Merkmalen der unabhängigen Ansprüche gelöst. Vorteilhafte Weiterbildungen der Erfindung können den Unteransprüchen und der folgenden Beschreibung bevorzugter Ausführungsformen der Erfindung entnommen werden.

Die Erfindung schafft ein Kraftfahrzeug, vorzugsweise ein Nutzfahrzeug, insbesondere einen Lastkraftwagen oder eine Sattelzugmaschine. Das Kraftfahrzeug umfasst vorzugsweise eine Abgasnachbehandlungsanlage und einen Reduktionsmitteltank zur Aufnahme eines Reduktionsmittels und zeichnet sich insbesondere dadurch aus, dass der Reduktionsmitteltank am Heck des Kraftfahrzeugs angeordnet ist. Die Abgasnachbehandlungsanlage dient zweckmäßig zur selektiven katalytischen Reduktion (SCR: selektive katalytische Reduktion) von Stickoxiden. Die Abgasnachbehandlungsanlage ist folglich vorzugsweise eine SCR-basierte Abgasnachbehandlungsanlage.

Dadurch, dass am Heck des Kraftfahrzeugs relativ viel Bauraum zur Verfügung steht, kann das Aufnahmevolumen des Reduktionsmitteltanks dementsprechend vergrößert werden. Darüber hinaus führt die Platzierung des Reduktionsmitteltanks am Heck des Kraftfahrzeugs dazu, dass zwischen den Längsträgern und quasi vor dem Heck des Kraftfahrzeugs dementsprechend vergrößerter Bauraum zur Verfügung steht.

Es ist möglich, dass das Kraftfahrzeug einen Schlussquerträger aufweist und der Reduktionsmitteltank quasi in Längsrichtung des Kraftfahrzeugs zumindest abschnittsweise hinter dem Schlussquerträger angeordnet ist.

Es ist möglich, dass der Reduktionsmitteltank quasi in Breitenrichtung des Kraftfahrzeugs vorzugsweise beidseitig seitlich über den Schlussquerträger hinausragt.

Der Reduktionsmitteltank kann ferner z. B. nach oben und/oder nach unten über den Schlussquerträger hinausragen.

Das Kraftfahrzeug umfasst vorzugsweise eine zweckmäßig leiterrahmenförmige Rahmentragstruktur mit einer Längsträgerkonstruktion, vorzugsweise mehreren Querträgern und einem Schlussquerträger.

Es ist möglich, dass der Reduktionsmitteltank quasi in Längsrichtung des Kraftfahrzeugs hinter der Längsträgerkonstruktion vorzugsweise beidseitig seitlich über die Längsträgerkonstruktion hinausragt.

Der Reduktionsmitteltank kann zweckmäßig mit einer Aussparung versehen sein, in der der Schlussquerträger und/oder ein hinterer Endabschnitt der Längsträgerkonstruktion aufgenommen ist.

Es ist möglich, dass der Reduktionsmitteltank zumindest abschnittsweise oben, unten und/oder seitlich den Schlussquerträger überlappt.

Um das Aufnahmevolumen des Reduktionsmitteltanks zu vergrößern, kann die Form des Reduktionsmitteltanks an eine Anhänger-Geometrie, eine Schwenkgeometrie eines Anhängers und/oder an eine Böschungsgeometrie angepasst werden. Der Anhänger ist vorzugsweise ein Sattelauflieger.

Der Reduktionsmitteltank ist vorzugsweise unten nach hinten oben reduziert, insbesondere unten schräg nach hinten oben ausgeformt. Dadurch ist der Harnstofftank zweckmäßig an eine Böschungsgeometrie angelehnt.

Es ist möglich, dass der Reduktionsmitteltank quasi in Längsrichtung des Kraftfahrzeugs nach hinten konvex ausgeformt ist. Dadurch ist der Reduktionsmitteltank zweckmäßig an eine Schwenkgeometrie eines Anhängers angelehnt.

Der Reduktionsmitteltank ist vorzugsweise im Querschnitt und/oder bei Seitenbetrachtung im Wesentlichen L-förmig ausgeformt. Dabei kann es sich z. B. um eine stehende, auf dem Kopf stehende oder anderweitig verdrehte im Wesentlichen L-förmige Ausgestaltung handeln.

Alternativ oder ergänzend kann der Reduktionsmitteltank im Horizontalschnitt und/oder bei Draufsicht von oben und/oder unten im Wesentlichen U-förmig ausgeformt sein.

Es ist möglich, dass der Reduktionsmitteltank zumindest eine Einrichtung zur Aufnahme und/oder Montage einer Rückleuchtenanordnung aufweist. Die Rückleuchtenanordnung kann eine Rückfahrleuchte, Nebelschlussleuchte, Blinkerleuchte und/oder Bremsleuchte umfassen. Bei einer bevorzugten Ausführungsform der Erfindung, umfasst die zumindest eine Einrichtung eine Vertiefung im Reduktionsmitteltank, in die die Rückleuchtenanordnung eingesetzt und montiert werden kann oder ist.

Der Reduktionsmitteltank kann zudem zweckmäßig eine Einrichtung zur Aufnahme und/oder Montage eines Kraftfahrzeug-Kennzeichens aufweisen. Bei einer bevorzugten Ausführungsform der Erfindung umfasst die Einrichtung eine Vertiefung im Reduktionsmitteltank, in die das Kraftfahrzeug-Kennzeichen eingesetzt und montiert werden kann oder ist.

Der Reduktionsmitteltank stellt zweckmäßig ein heckseitiges, sich in Breitenrichtung des Kraftfahrzeugs erstreckendes Schlussquerelement des Kraftfahrzeugs dar.

Es ist möglich, dass am Heck des Kraftfahrzeugs ein Batteriekasten angeordnet ist, z. B. zumindest abschnittsweise vor, hinter, auf und/oder unter dem Schlussquerträger. Vorzugsweise überlappt der Reduktionsmitteltank den Batteriekasten, z. B. unten, oben und/oder seitlich.

Der Reduktionsmitteltank ist vorzugsweise an den Schlussquerträger und/oder einem hinteren Endabschnitt der Längsträgerkonstruktion befestigt.

Die Abgasnachbehandlungsanlage umfasst vorzugsweise einen SCR-Katalysator (SCR: selektive katalytische Reduktion). Der Reduktionsmitteltank ist zweckmäßig mit einer Reduktionsmitteleinspritzvorrichtung zum Einspritzen des Reduktionsmittels in eine Abgasleitung stromaufwärts des SCR-Katalysators verbunden.

Der Reduktionsmitteltank hat zweckmäßig ein Aufnahmevolumen von mindestens 80 Liter, mindestens 90 Liter, mindestens 100 Liter, mindestens 110 Liter, mindestens 120 Liter oder sogar mindestens 130 Liter.

Der Reduktionsmitteltank ist vorzugsweise ein Harnstofftank zur Aufnahme eines Harnstoff enthaltenen Gemischs, insbesondere einer sogenannten wässrigen Harnstofflösung.

Zu erwähnen ist, dass das Kennzeichen zweckmäßig das Kraftahrzeug-Kennzeichen oder Nummernschild umfasst.

Zu erwähnen ist ferner, dass die Rahmentragstruktur des Kraftfahrzeugs vorzugsweise eine Längsträgerkonstruktion, mehrere Querträger und den Schlussquerträger umfassen kann.

Zu erwähnen ist außerdem, dass der Schlussquerträger z. B. direkt in die Rahmentragstruktur des Kraftfahrzeugs integriert sein kann, insbesondere zwischen die Längsträgerkonstruktion. Ferner kann der Schlussquerträger z. B. als Anbauteil hinter der eigentlichen Rahmentragstruktur angeordnet sein und vorzugsweise über eine Halterungskonstruktion mit der eigentlichen Rahmentragstruktur verbunden werden.

Die Erfindung ist nicht auf ein Kraftfahrzeug beschränkt, sondern umfasst darüber hinaus einen Reduktionsmitteltank zur Aufnahme eines Reduktionsmittels und zur Anordnung am Heck eines Kraftfahrzeugs. Der Reduktionsmitteltank kann wie zuvor beschrieben ausgeführt sein und umfasst insbesondere zumindest eine Einrichtung zur Aufnahme und/oder Montage einer Rückleuchtenanordnung (z. B. umfassend eine Rückleuchte, eine Bremsleuchte, eine Blinkerleuchte und/oder eine Nebelschlussleuchte) und/oder eines Kraftfahrzeug-Kennzeichens.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine perspektivische Ansicht eines hinteren Teils eines Kraftfahrzeugs gemäß einer Ausführungsform der Erfindung und eines Reduktionsmitteltanks gemäß einer Ausführungsform der Erfindung,
- Figur 2: zeigt eine Seitenansicht des hinteren Teils des Kraftfahrzeugs und des Reduktionsmitteltanks der Figur 1,
- Figur 3: zeigt eine Draufsicht von oben auf den hinteren Teil des Kraftfahrzeugs und den Reduktionsmitteltank der Figuren 1 und 2 und
- Figur 4: zeigt eine Ansicht des hinteren Teils des Kraftfahrzeugs und des Reduktionsmitteltanks der Figuren 1 bis 3 von hinten.

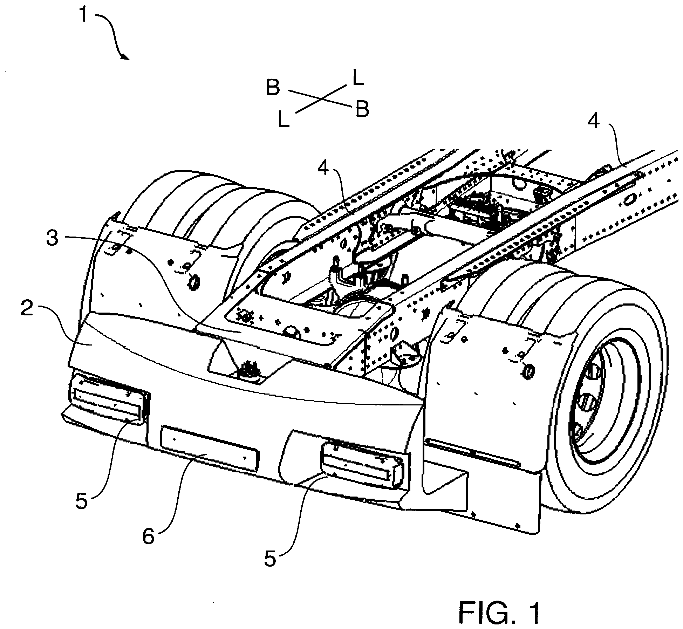

Figur 1 zeigt eine perspektivische Ansicht eines hinteren Teils eines Kraftfahrzeugs 1 gemäß einer Ausführungsform der Erfindung. Das Kraftfahrzeug 1 ist mit einem Reduktionsmitteltank 2 gemäß einer Ausführungsform der Erfindung ausgestattet.

Das Kraftfahrzeug 1 ist als Lastkraftwagen, insbesondere Sattelzugmaschine, ausgeführt und umfasst eine Rahmentragstruktur aus einer Längsträgeranordnung 4, Querträgern und einem Schlussquerträger 3, der vorzugsweise das heckseitige Ende der Längsträgerkonstruktion 4 oder allgemein des Kraftfahrzeugs 1 bildet.

Der Reduktionsmitteltank 2 ist am Heck der Sattelzugmaschine 1 angeordnet und zwar insbesondere in Längsrichtung L der Sattelzugmaschine 1 hinter dem Schlussquerträger 3 und folglich hinter der Längsträgerkonstruktion 4.

Der Reduktionsmitteltank 2 ragt in Breitenrichtung B der Sattelzugmaschine 1 seitlich über den Schlussquerträger 3 und seitlich über die Längsträgerkonstruktion 4 hinaus. Der Reduktionsmitteltank 2 ist im Querschnitt bzw. bei Seitenbetrachtung im Wesentlichen L-förmig ausgeführt.

Eine Besonderheit des Reduktionsmitteltanks 2 ist, dass er Einrichtungen 5 zur Aufnahme und/oder Montage einer Rückleuchtenanordnung aufweist, die zweckmäßig eine Rückfahr-, Nebelschluss-, Blinker- und Bremsleuchte umfassen kann. Die Einrichtung 5 umfasst eine Vertiefung im Reduktionsmitteltank 2, in der die Rückleuchtenanordnung eingesetzt und montiert wird.

Außerdem umfasst der Reduktionsmitteltank 2 eine Einrichtung 6 zur Aufnahme und/oder Montage des Kennzeichens der Sattelzugmaschine 1. Ähnlich wie in Bezug auf die Einrichtung 5 beschrieben, kann die Einrichtung 6 ebenfalls eine Vertiefung im Reduktionsmitteltank 2 umfassen, in der das Kennzeichen eingesetzt und montiert wird.

Der Reduktionsmitteltank 2 weist ein Aufnahmevolumen von mindestens 100 Liter auf.

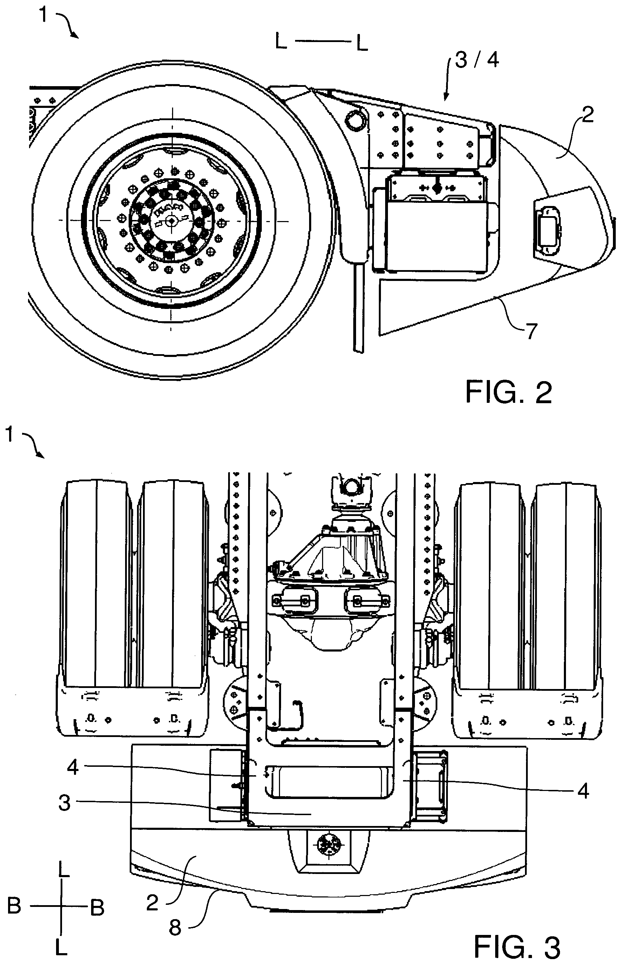

Figur 2 zeigt eine Seitenansicht des hinteren Teils der Sattelzugmaschine 1 und des Reduktionsmifteltanks 2 der Figur 1.

Figur 2 kann insbesondere entnommen werden, dass der Reduktionsmitteltank 2 den Schlussquerträger 3 unten überlappt und ferner nach oben über den Schlussquerträger 3 hinausragt. Allerdings sind ebenso Ausführungsformen möglich, in denen der Reduktionsmitteltank 2 den Schlussquerträger 3 oben und/oder unten überlappt.

Figur 2 kann ferner entnommen werden, dass der Reduktionsmitteltank 2 unten nach hinten oben reduziert ist, insbesondere unten schräg nach hinten oben ausgeformt ist, um dadurch an eine Böschungsgeometrie angelehnt zu werden, was in Figur 2 durch das Bezugszeichen 7 gekennzeichnet ist.

Figur 3 kann außerdem entnommen werden, dass der Reduktionsmitteltank 2 hinter dem Schlussquerträger 3 angeordnet ist, den Schlussquerträger 3 unten überlappt und oben und unten über den Schlussquerträger 3 hinausragt.

Figur 3 zeigt eine Draufsicht von oben auf den hinteren Teil der Sattelzugmaschine 1 und den Reduktionsmitteltank 2 der Figuren 1 und 2.

Figur 3 kann insbesondere entnommen werden, dass der Reduktionsmitteltank 2 hinter dem Schlussquerträger 3 angeordnet ist und seitlich über den Schlussquerträger 3 hinausragt.

Figur 3 kann des Weiteren entnommen werden, dass der Reduktionsmitteltank 2 nach hinten konvex ausgeformt ist und somit insbesondere an eine Schwenkgeometrie eines Anhängers (Sattelauflieger) angelehnt ist, was in Figur 3 durch das Bezugszeichen 8 gekennzeichnet ist

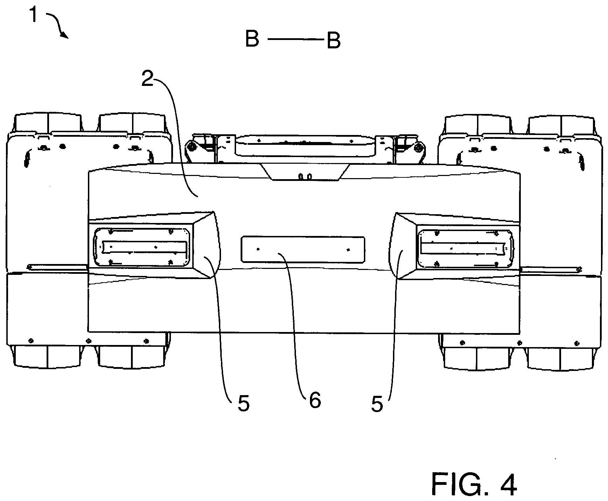

Figur 4 zeigt eine Ansicht der Sattelzugmaschine 1 und des Reduktionsmitteltanks 2 der Figuren 1 bis 3 von hinten.

Figur 4 können insbesondere nochmals die heckseitige Anordnung des Reduktionsmitteltanks 2 und die Einrichtungen 5 und 6 für die Rückleuchtenanordnung und das Kennzeichen entnommen werden. Der Reduktionsmitteltank 2 stellt ein heckseitiges Schlussquerelement der Sattelzugmaschine 1 dar.

Zu erwähnen ist, dass sich bei einer nicht gezeigten Ausführungsform der Reduktionsmitteltank 2 stärker an den Schlussquerträger 3 anschmiegen kann, z. B. den Schlussquerträger 3 oben, unten und/oder seitlich überlappen kann und dadurch z. B. eine Aussparung zur Aufnahme des Schlussquerträgers 3 geschaffen werden kann.

Die Sattelzugmaschine 1 ist zweckmäßig mit einer Abgasnachbehandlungsanlage zur selektiven katalytischen Reduktion von Stickoxiden ausgestattet. Die Abgasnachbehandlungsanlage ist in den Figuren nicht gezeigt und kann mit Ausnahme des Reduktionsmitteltanks 2 im Wesentlichen herkömmlich ausgeführt sein bzw. funktionieren.

Die Abgasnachbehandlungsanlage umfasst eine mit dem Reduktionsmitteltank 2 verbundene Einspritzdüse zum Einspritzen des Reduktionsmittels in eine stromabwärts eines Dieselmotors der Sattelzugmaschine 1 verlaufende Abgasleitung. Stromabwärts hinter der Einspritzdüse ist eine Katalysatoranordnung angeordnet, die einen SCR-Katalysator und zweckmäßig einen Hydrolysekatalysator und/oder einen Oxidationskatalysator umfassen kann.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Kraftfahrzeug, insbesondere Nutzfahrzeug
- 2: Reduktionsmitteltank
- 3: Schlussquerträger
- 4: Längsträgeranordnung
- 5: Einrichtung für Rückleuchtenanordnung
- 6: Einrichtung für Kraftfahrzeug-Kennzeichen
- 7: Reduzierter Abschnitt, zweckmäßig angepasst an Böschungsgeometrie
- 8: Konvexer Abschnitt, zweckmäßig angepasst an Anhänger-Schwenkradius

## Patentansprüche

1. Kraftfahrzeug (1), vorzugsweise Lastkraftwagen, insbesondere Sattelzugmaschine: mit einer Abgasnachbehandlungsanlage und einem Reduktionsmitteltank (2) zur Aufnahme eines Reduktionsmittels, wobei der Reduktionsmitteltank (2) am Heck des Kraftfahrzeugs (1) angeordnet ist, **dadurch gekennzeichnet, dass** der Reduktionsmitteltank (2) zumindest eines der folgenden Merkmale aufweist:
- zumindest eine Einrichtung (5) zur Aufnahme und/oder Montage einer Rückleuchtenanordnung,
- eine Einrichtung (6) zur Aufnahme und/oder Montage eines Kraftfahrzeug-Kennzeichens.

2. Kraftfahrzeug (1) nach Anspruch 1, **dadurch gekennzeichnet, dass** das Kraftfahrzeug (1) einen Schlussquerträger (3) aufweist und der Reduktionsmitteltank (2) zumindest abschnittsweise hinter dem Schlussquerträger (3) angeordnet ist.

3. Kraftfahrzeug (1) nach Anspruch 1 oder 2, **dadurch gekennzeichnet, dass** der Reduktionsmitteltank (2) seitlich über den Schlussquerträger (3) hinausragt.

4. Kraftfahrzeug (1) nach einem der vorhergehenden Ansprüche, **dadurch gekennzeichnet, dass** der Reduktionsmitteltank (2) nach oben und/oder nach unten über den Schlussquerträger (3) hinausragt.

5. Kraftfahrzeug (1) nach einem der vorhergehenden Ansprüche, **dadurch gekennzeichnet, dass** das Kraftfahrzeug (1) eine Rahmentragstruktur mit einer Längsträgerkonstruktion (4) und einem Schlussquerträger (3) aufweist und der Reduktionsmitteltank (2) hinter der Längsträgerkonstruktion (4) seitlich über die Längsträgerkonstruktion (4) hinausragt.

6. Kraftfahrzeug (1) nach einem der vorhergehenden Ansprüche, **dadurch gekennzeichnet, dass** der Reduktionsmitteltank (2) eine Aussparung aufweist, in der der Schlussquerträger (3) und/oder ein hinterer Endabschnitt der Längsträgerkonstruktion (4) aufgenommen ist.

7. Kraftfahrzeug (1) nach einem der vorhergehenden Ansprüche, **dadurch gekennzeichnet, dass** der Reduktionsmitteltank (2) den Schlussquerträger (3) oben, unten und/oder seitlich überlappt.

8. Kraftfahrzeug (1) nach einem der vorhergehenden Ansprüche, **dadurch gekennzeichnet, dass** unten der Reduktionsmitteltank (2) nach hinten oben reduziert ist (7) und somit insbesondere an eine Böschungsgeometrie angelehnt ist.

9. Kraftfahrzeug (1) nach einem der vorhergehenden Ansprüche, **dadurch gekennzeichnet, dass** der Reduktionsmitteltank (2) nach hinten konvex ausgeformt ist (8) und somit insbesondere an eine Schwenkgeometrie eines Anhängers angelehnt ist.

10. Kraftfahrzeug (1) nach einem der vorhergehenden Ansprüche, **dadurch gekennzeichnet, dass** der Reduktionsmitteltank (2) im Querschnitt und/oder bei Seitenbetrachtung im Wesentlichen L-förmig ausgeformt ist.

11. Kraftfahrzeug (1) nach einem der vorhergehenden Ansprüche, **dadurch gekennzeichnet, dass** der Reduktionsmitteltank (2) im Horizontalschnitt und/oder bei Draufsicht von oben und/oder unten im Wesentlichen U-förmig ausgeformt ist.

12. Kraftfahrzeug (1) nach einem der vorhergehenden Ansprüche, **dadurch gekennzeichnet, dass** der Reduktionsmitteltank (2) zumindest eine Einrichtung (5) zur Aufnahme und/oder Montage einer Rückleuchtenanordnung aufweist, umfassend eine Rückfahr-Nebelschluss-, Blinker- und/oder Bremsleuchte.

13. Kraftfahrzeug (1) nach einem der vorhergehenden Ansprüche, **dadurch gekennzeichnet, dass** der Reduktionsmitteltank (2) ein heckseitiges, sich zweckmäßig in Breitenrichtung (B) des Kraftfahrzeugs erstreckendes Schlusselement des Kraftfahrzeugs (1) darstellt.

14. Kraftfahrzeug (1) nach einem der vorhergehenden Ansprüche, **dadurch gekennzeichnet, dass** der Reduktionsmitteltank (2) einen Batteriekasten überlappt, vorzugsweise unten, oben und/oder seitlich.

15. Kraftfahrzeug (1) nach einem der vorhergehenden Ansprüche, **dadurch gekennzeichnet, dass** die Abgasnachbehandlungsanlage einen SCR-Katalysator aufweist und vorzugsweise der Reduktionsmitteltank (2) mit einer Reduktionsmitteleinspritzvorrichtung zum Einspritzen des Reduktionsmittels in eine Abgasleitung stromaufwärts des SCR-Katalysators verbunden ist.

16. Kraftfahrzeug (1) nach einem der vorhergehenden Ansprüche, **dadurch gekennzeichnet, dass** der Reduktionsmitteltank (2) ein Aufnahmevolumen von mindestens 80 Liter, mindestens 90 Liter, mindestens 100 Liter, mindestens 110 Liter, mindestens 120 Liter oder mindestens 130 Liter aufweist.

17. Kraftfahrzeug (1) nach einem der vorhergehenden Ansprüche, **dadurch gekennzeichnet, dass** der Reduktionsmitteltank (2) ein Harnstofftank zur Aufnahme eines Harnstoff enthaltenden Gemischs ist.

18. Reduktionsmitteltank (2) zur Aufnahme eines Reduktionsmittels und zur Anordnung am Heck eines Kraftfahrzeugs (1), **dadurch gekennzeichnet, dass** der Reduktionsmitteltank (2) zumindest eine Einrichtung (5, 6) zur Aufnahme und/oder Montage einer Rückleuchtenanordnung und/oder eines Kraftfahrzeug-Kennzeichens aufweist.

## Claims

1. Motor vehicle (1), preferably a lorry, in particular a semitrailer tractor: having an exhaust gas aftertreatment system and a reducing agent tank (2) for holding a reducing agent, the reducing agent tank (2) being arranged at the rear of the motor vehicle (1), **characterized in that** the reducing agent tank (2) has at least one of the following features:
- at least one means (5) for accommodating and/or mounting a rear light arrangement,
- a means (6) for accommodating and/or mounting a motor vehicle registration plate.

2. Motor vehicle (1) according to Claim 1, **characterized in that** the motor vehicle (1) has an end crossmember (3) and the reducing agent tank (2) is arranged behind the end crossmember (3) at least in some section or sections.

3. Motor vehicle (1) according to Claim 1 or 2, **characterized in that** the reducing agent tank (2) projects laterally beyond the end crossmember (3).

4. Motor vehicle (1) according to one of the preceding claims, **characterized in that** the reducing agent tank (2) projects upwards and/or downwards beyond the end crossmember (3).

5. Motor vehicle (1) according to one of the preceding claims, **characterized in that** the motor vehicle (1) has a frame-type supporting structure comprising a longitudinal member structure (4) and an end crossmember (3), and the reducing agent tank (2) projects laterally beyond the longitudinal member structure (4) behind the longitudinal member structure (4).

6. Motor vehicle (1) according to one of the preceding claims, **characterized in that** the reducing agent tank (2) has a recess, in which the end crossmember (3) and/or a rear end portion of the longitudinal member structure (4) is/are accommodated.

7. Motor vehicle (1) according to one of the preceding claims, **characterized in that** the reducing agent tank (2) overlaps the end crossmember (3) at the top, bottom and/or laterally.

8. Motor vehicle (1) according to one of the preceding claims, **characterized in that** the reducing agent tank (2) is reduced (7) upwards towards the rear at the bottom and is thus adapted, in particular, to a slope geometry.

9. Motor vehicle (1) according to one of the preceding claims, **characterized in that** the reducing agent tank (2) is shaped convexly (8) towards the rear and is thus adapted, in particular, to a pivoting geometry of a trailer.

10. Motor vehicle (1) according to one of the preceding claims, **characterized in that** the reducing agent tank (2) is substantially L-shaped in cross section and/or when viewed from the side.

11. Motor vehicle (1) according to one of the preceding claims, **characterized in that** the reducing agent tank (2) is substantially U-shaped in horizontal section and/or in plan view from above and/or below.

12. Motor vehicle (1) according to one of the preceding claims, **characterized in that** the reducing agent tank (2) has at least one means (5) for accommodating and/or mounting a rear light arrangement, comprising a reversing, rear fog, indicator and/or brake light.

13. Motor vehicle (1) according to one of the preceding claims, **characterized in that** the reducing agent tank (2) forms a rear end element of the motor vehicle (1), expediently extending in the direction (B) of the width of the motor vehicle.

14. Motor vehicle (1) according to one of the preceding claims, **characterized in that** the reducing agent tank (2) overlaps a battery case, preferably at the bottom, top and/or laterally.

15. Motor vehicle (1) according to one of the preceding claims, **characterized in that** the exhaust gas aftertreatment system has an SCR catalyst, and the reducing agent tank (2) is preferably connected to a reducing agent injection device for injecting the reducing agent into an exhaust line upstream of the SCR catalyst.

16. Motor vehicle (1) according to one of the preceding claims, **characterized in that** the reducing agent tank (2) has a holding capacity of at least 80 litres, at least 90 litres, at least 100 litres, at least 110 litres, at least 120 litres or at least 130 litres.

17. Motor vehicle (1) according to one of the preceding claims, **characterized in that** the reducing agent tank (2) is a urea tank for holding a mixture containing urea.

18. Reducing agent tank (2) for holding a reducing agent and for arrangement at the rear of a motor vehicle (1), **characterized in that** the reducing agent tank (2) has at least one means (5, 6) for accommodating and/or mounting a rear light arrangement and/or a motor vehicle registration plate.

## Revendications

1. Véhicule automobile (1), de préférence poids-lourd, notamment tracteur routier : comportant une installation de traitement postérieur de gaz d'échappement et un réservoir d'agent réducteur (2) pour recevoir un agent réducteur, dans lequel le réservoir d'agent réducteur (2) est disposé à l'arrière du véhicule automobile (1), **caractérisé en ce que** le réservoir d'agent réducteur (2) présente au moins une des caractéristiques suivantes :
- au moins un dispositif (5) pour recevoir et/ou monter un dispositif de feux arrière,
- un dispositif (6) pour recevoir et/ou monter une identification de véhicule automobile.

2. Véhicule automobile (1) selon la revendication 1, **caractérisé en ce que** le véhicule automobile (1) présente une traverse arrière (3) et le réservoir d'agent réducteur (2) est disposé au moins par portions derrière la traverse arrière (3).

3. Véhicule automobile (1) selon la revendication 1 ou 2, **caractérisé en ce que** le réservoir d'agent réducteur (2) dépasse en saillie latéralement par-dessus la traverse arrière (3).

4. Véhicule automobile (1) selon une des revendications précédentes, **caractérisé en ce que** le réservoir d'agent réducteur (2) dépasse en saillie vers le haut et/ou vers le bas par-dessus la traverse arrière (3).

5. Véhicule automobile (1) selon une des revendications précédentes, **caractérisé en ce que** le véhicule automobile (1) présente une structure porteuse de châssis avec une construction porteuse longitudinale (4) et une traverse arrière (3) et le réservoir d'agent réducteur (2) dépasse en saillie derrière la construction porteuse longitudinale (4) latéralement par-dessus la construction porteuse longitudinale (4).

6. Véhicule automobile (1) selon une des revendications précédentes, **caractérisé en ce que** le réservoir d'agent réducteur (2) présente une cavité, dans laquelle la traverse arrière (3) et/ou une portion d'extrémité arrière de la construction porteuse longitudinale (4) est renfermée.

7. Véhicule automobile (1) selon une des revendications précédentes, **caractérisé en ce que** le réservoir d'agent réducteur (2) se superpose à la traverse arrière (3) par le haut, le bas et/ou latéralement.

8. Véhicule automobile (1) selon une des revendications précédentes, **caractérisé en ce que** le bas du réservoir d'agent réducteur (2) est réduit vers l'arrière en haut (7) et est ainsi appuyé notamment à une géométrie de remblai.

9. Véhicule automobile (1) selon une des revendications précédentes, **caractérisé en ce que** le réservoir d'agent réducteur (2) est façonné de manière convexe à l'arrière (8) et est ainsi appuyé notamment à une géométrie pivotante d'une remorque.

10. Véhicule automobile (1) selon une des revendications précédentes, **caractérisé en ce que** le réservoir d'agent réducteur (2) est façonné essentiellement en forme de L en coupe transversale et/ou en vue latérale.

11. Véhicule automobile (1) selon une des revendications précédentes, **caractérisé en ce que** le réservoir d'agent réducteur (2) est façonné essentiellement en forme de U en coupe horizontale et/ou en vue de dessus par le haut et/ou le bas.

12. Véhicule automobile (1) selon une des revendications précédentes, **caractérisé en ce que** le réservoir d'agent réducteur (2) présente au moins un dispositif (5) pour recevoir et/ou monter un dispositif de feux arrière, comprenant un feu de recul, un feu antibrouillard, un clignotant et/ou un feu de stop.

13. Véhicule automobile (1) selon une des revendications précédentes, **caractérisé en ce que** le réservoir d'agent réducteur (2) constitue un élément fermé du véhicule automobile (1) s'étendant à l'arrière, de manière adéquate dans la direction de largeur (B) du véhicule automobile.

14. Véhicule automobile (1) selon une des revendications précédentes, **caractérisé en ce que** le réservoir d'agent réducteur (2) se superpose à un casier de batterie, de préférence par le bas, le haut et/ou latéralement.

15. Véhicule automobile (1) selon une des revendications précédentes, **caractérisé en ce que** le dispositif de traitement ultérieur des gaz d'échappement présent un catalyseur SCR et de préférence le réservoir d'agent réducteur (2) est relié avec un dispositif d'injection d'agent réducteur pour injecter l'agent réducteur dans une conduite de gaz d'échappement en amont du catalyseur SCR.

16. Véhicule automobile (1) selon une des revendications précédentes, **caractérisé en ce que** le réservoir d'agent réducteur (2) présente un volume disponible d'au moins 80 litres, au moins 90 litres, au moins 100 litres, au moins 110 litres, au moins 120 litres ou au moins 130 litres.

17. Véhicule automobile (1) selon une des revendications précédentes, **caractérisé en ce que** le réservoir d'agent réducteur (2) est un réservoir d'urée pour recevoir un mélange contenant de l'urée.

18. Réservoir d'agent réducteur (2) pour recevoir un agent réducteur et à disposer à l'arrière d'un véhicule automobile (1), **caractérisé en ce que** le réservoir d'agent réducteur (2) présente au moins un dispositif (5, 6) pour recevoir et/ou monter un dispositif de feu arrière et/ou une identification de véhicule.
